(19) Europäisches Patentamt / European Patent Office / Office européen des brevets

(11) **EP 3 365 697 B1**

(12) **FASCICULE DE BREVET EUROPEEN**

(45) Date de publication et mention
de la délivrance du brevet:
**03.12.2025 Bulletin 2025/49**

(21) Numéro de dépôt: **16782230.3**

(22) Date de dépôt: **17.10.2016**

(51) Classification Internationale des Brevets (IPC):
**G01S 11/02** (2010.01)     **G01S 13/84** (2006.01)
**G07C 9/00** (2020.01)

(52) Classification Coopérative des Brevets (CPC):
**G07C 9/00309; G01S 11/02; G01S 13/84;**
G07C 2009/00555; G07C 2009/00793;
G07C 2209/61

(86) Numéro de dépôt international:
**PCT/EP2016/074908**

(87) Numéro de publication internationale:
**WO 2017/067892 (27.04.2017 Gazette 2017/17)**

(54) **PROCÉDÉ D'ESTIMATION D'UNE DISTANCE ET UNITÉ ÉLECTRONIQUE POUR VÉHICULE**

VERFAHREN ZUR SCHÄTZUNG DER ENTFERNUNG UND ELEKTRONISCHE EINHEIT FÜR EIN FAHRZEUG

METHOD FOR ESTIMATING A DISTANCE AND ELECTRONIC UNIT FOR A VEHICLE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **19.10.2015 FR 1559960**

(43) Date de publication de la demande:
**29.08.2018 Bulletin 2018/35**

(73) Titulaire: **Valeo Comfort and Driving Assistance
94000 Créteil (FR)**

(72) Inventeur: **LECONTE, Eric
94046 Créteil Cedex (FR)**

(74) Mandataire: **Delplanque, Arnaud
Valeo Comfort and Driving Assistance
6 rue Daniel Costantini
94000 Créteil (FR)**

(56) Documents cités:
EP-A2- 0 999 103       WO-A1-00/06858
WO-A1-2012/114320    WO-A2-03/060835
WO-A2-2007/128319

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

DOMAINE TECHNIQUE AUQUEL SE RAPPORTE L'INVENTION

La présente invention concerne l'estimation d'une distance entre un identifiant et un véhicule.

Elle concerne plus particulièrement un procédé d'estimation d'une distance et une unité électronique pour véhicule.

L'invention s'applique particulièrement avantageusement dans le cas où l'on souhaite protéger le véhicule des attaques relais.

ARRIERE-PLAN TECHNOLOGIQUE

On connaît les systèmes de type PEPS (pour *"Passive Entry - Passive Start"*) dans lesquels la mise en œuvre d'une fonctionnalité (telle que le déverrouillage des portes d'un véhicule ou le démarrage d'un tel véhicule) est conditionné par la présence à proximité du véhicule d'un identifiant (généralement porté par l'utilisateur du véhicule).

Le document WO 2007/128319 divulgue un système d'entrée sans fil qui verrouille/déverrouille une serrure (par exemple, sur une voiture) en fonction de la proximité d'un appareil électronique sans fil autorisé (par exemple, un téléphone portable) à un système de détection fixe. Le système détermine si l'utilisateur est suffisamment proche pour autoriser l'accès et verrouille ou déverrouille la serrure en conséquence.

Le document US 2003/090 365 propose de mesurer des phases de réception de signaux électromagnétiques échangés entre l'identifiant et le véhicule pour deux fréquences différentes des signaux électromagnétiques.

La distance séparant l'identifiant et le véhicule peut alors être estimée sur la base de la différence des phases mesurées.

OBJET DE L'INVENTION

Dans ce contexte, la présente invention propose un procédé d'estimation d'une distance séparant un véhicule équipé d'un premier module de communication sans fil et un identifiant équipé d'un second module de communication sans fil, comprenant les étapes suivantes :

- génération d'une liste ordonnée aléatoirement ;
- réception, par l'un au moins des premier et second modules de communication sans fil, de signaux électromagnétiques ayant une fréquence évoluant successivement parmi une pluralité de fréquences conformément à ladite liste (dans l'ordre indiqué dans cette liste) ;

- pour chaque fréquence de la pluralité de fréquences, mesure d'une phase de réception du signal électromagnétique ayant la fréquence concernée ;
- estimation de ladite distance sur la base des phases mesurées.

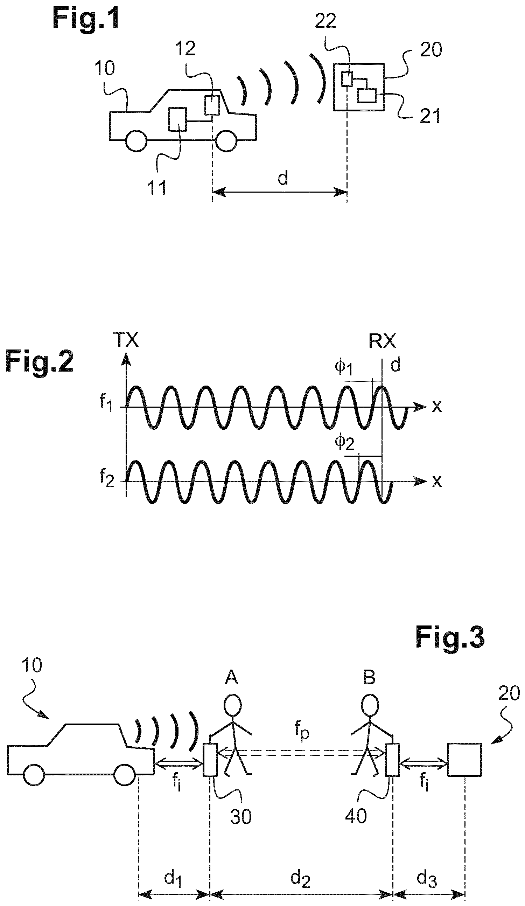

La fréquence des signaux électromagnétiques utilisés pour estimer la distance évolue ainsi de manière imprévisible et une attaque relais telle que décrite plus loin en référence à la figure 3 sera donc vaine.

Selon des caractéristiques de l'invention:

- le procédé comprend une étape de transmission de données descriptives de la liste entre le premier module de communication sans fil et le second module de communication sans fil ;
- le procédé comprend une étape de chiffrement des données descriptives de la liste ;
- les données descriptives de la liste sont transmises chiffrées entre le premier module de communication sans fil et le second module de communication sans fil ;

Selon des caractéristiques optionelles et donc non limitatives:

- le procédé comprend une étape d'émission, par l'autre des premier et second modules de communication sans fil, desdits signaux électromagnétiques ayant une fréquence évoluant successivement parmi la pluralité de fréquences conformément à ladite liste ;
- l'étape d'estimation de ladite distance comprend une étape de détermination d'une pente d'une droite de régression liée à des points définis chacun par une fréquence de la pluralité de fréquences et la phase mesurée associée ;
- l'étape de réception est mise en œuvre par le premier module de communication sans fil.

Le procédé d'estimation peut comprendre en outre l'une au moins des étapes suivantes :

- émission par le premier module de communication sans fil de signaux électromagnétiques ayant une fréquence évoluant successivement parmi la pluralité de fréquences ;
- réception par le second module de communication sans fil de signaux communication sans fil au premier module de communication sans fil.

Les secondes phases transmises peuvent alors être utilisées au cours de l'étape d'estimation de ladite distance.

Le procédé précité peut comprendre en outre une étape de mise en œuvre éventuelle d'une fonctionnalité du véhicule en fonction de la distance estimée.

L'invention propose également une unité électronique pour véhicule comprenant :

- un élément conçu pour générer une liste ordonnée aléatoirement ;
- un élément conçu pour chiffrer des données descriptives de la liste ordonnée, lesdites données descriptives de la liste représentant les valeurs successives des fréquences ou les indices de fréquences ;
- un module de communication commandé par l'unité électronique pour transmettre pour émettre les données descriptives chiffrées ;
- un élément conçu pour commander la réception (par un module de communication sans fil équipant le véhicule), en provenance d'un identifiant, de signaux électromagnétiques ayant une fréquence évoluant successivement parmi une pluralité de fréquences conformément à ladite liste ;
- un élément conçu pour mesurer, pour chaque fréquence de la pluralité de fréquences, une phase de réception du signal électromagnétique ayant la fréquence concernée ;
- un élément conçu pour estimer une distance séparant le véhicule et l'identifiant sur la base des phases mesurées.

Une telle unité électronique peut également présenter l'une au moins des caractéristiques optionnelles présentées ci-dessus en termes de procédé.

Lorsque l'unité électronique est réalisée sur la base d'un microprocesseur et d'au moins une mémoire (comme décrit ci-après), certains au moins des éléments précités peuvent être mis en œuvre au moyen d'instructions mémorisées dans ladite mémoire et conçues pour effectuer la fonction de l'élément concerné lorsqu'elles sont exécutées par le microprocesseur.

DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :

- la figure 1 représente schématiquement les éléments principaux d'un système dans lequel peut être mise en œuvre l'invention ;
- la figure 2 représente schématiquement la propagation de deux signaux de fréquences différentes l'une de l'autre ;
- la figure 3 représente une attaque relais possible sur un système du type de celui de la figure 1 ; et
- la figure 4 est un logigramme représentant un procédé d'estimation de la distance séparant un identifiant et un véhicule.

La figure 1 représente schématiquement les éléments principaux d'un système dans lequel peut être mise en œuvre l'invention.

Un tel système comprend un véhicule 10, ici un véhicule automobile, et un identifiant 20, par exemple une clé ou badge d'accès au véhicule 10 (ou, en variante, un terminal utilisateur, tel qu'un téléphone mobile ou un ordiphone - ou *"smartphone"* selon l'application anglaise couramment utilisée, muni de droits d'accès au véhicule 10).

Le véhicule 10 est équipé d'une unité électronique de commande 11 et d'un module de communication 12.

L'unité électronique de commande 11 comprend par exemple un microprocesseur et au moins une mémoire, par exemple une mémoire non-volatile réinscriptible. La mémoire mémorise notamment des instructions de programme qui permettent, lorsqu'elles sont exécutées par le microprocesseur, la mise en œuvre par l'unité électronique de commande 11 des procédés décrits ci-dessous. La mémoire mémorise également des valeurs ou paramètres utilisés au cours de ces procédés, par exemple des valeurs de phases mesurées $\Phi_i$ (comme expliqué plus loin).

La mémoire de l'unité électronique de commande 11 mémorise en outre une clé cryptographique K (qui a par exemple été inscrite au sein de l'unité électronique de commande 11 lors de sa fabrication).

En variante, l'unité électronique de commande 11 pourrait être réalisée sous la forme d'un circuit intégré à application spécifique (ou ASIC pour *"Application Specific Integrated Circuit"*).

Le module de communication 12 est conçu pour établir une liaison sans fil avec d'autres appareils électroniques, ici une liaison de type *"Bluetooth Low Energy"* (ou *"BLE"*). Le module de communication 12 est donc notamment conçu pour émettre et recevoir des signaux électromagnétiques (typiquement de fréquence supérieure à 1 Mhz, voire à 500 MHz), ici dans la bande à 2,4 GHz.

L'identifiant 20 est généralement porté par un utilisateur du véhicule 10 et permet la commande de certaines fonctionnalités du véhicule 10 (par exemple le déverrouillage des portes du véhicule 10), notamment lorsqu'il est approché du véhicule 10. L'identifiant 20 peut éventuellement comporter en outre des boutons de commande, à l'aide desquels l'utilisateur peut commander certaines au moins des fonctionnalités précitées ou d'autres fonctionnalités du véhicule 10.

L'identifiant 20 comprend une unité de commande 21 et un module de communication 22.

L'unité de commande 21 est par exemple réalisée au moyen d'un microprocesseur et d'au moins une mémoire, par exemple une mémoire non volatile réinscriptible. La mémoire mémorise notamment des instructions de programme qui permettent, lorsqu'elles sont exécutées par le microprocesseur, la mise en œuvre par l'unité de commande 21 des procédés décrits ci-dessous. La mémoire mémorise également des valeurs ou paramètres utilisés au cours de ces procédés.

La mémoire de l'unité de commande 21 mémorise en outre elle aussi la clé cryptographique K. Dans le cas où l'identifiant 20 est un badge (ou clé) d'accès au véhicule, la clé cryptographique K a par exemple été inscrite dans la mémoire de l'unité de commande 21 lors de la fabrication de l'identifiant 20. Dans la variante mentionnée ci-dessus où l'identifiant 20 est un terminal utilisateur, la clé cryptographique K a par exemple été reçue d'un serveur distant et mémorisée lors d'une phase de souscription à un service de commande des fonctionnalités du véhicule au moyen du terminal utilisateur.

En variante, l'unité de commande 21 pourrait être réalisée sous la forme d'un circuit intégré à application spécifique.

Le module de communication 22 est conçu pour établir une liaison sans fil (ici de type *"Bluetooth Low Energy"* ou *"BLE"*) avec d'autres appareils électroniques, en particulier avec l'unité électronique de commande 11 du véhicule 10 via le module de communication 12 mentionné plus haut. Le module de communication 22 est donc lui aussi conçu pour émettre et recevoir des signaux électromagnétiques (typiquement de fréquence supérieure à 1 Mhz, voire à 500 MHz), ici dans la bande à 2,4 GHz.

Grâce à la liaison sans fil ainsi établie entre le module de communication 12 du véhicule 10 et le module de communication 22 de l'identifiant 20, des données peuvent être échangées entre l'unité électronique de commande 11 du véhicule 10 et l'unité de commande 21 de l'identifiant 20, comme expliqué plus loin.

Les signaux électromagnétiques échangés entre les modules de communications 12, 22 peuvent en outre être utilisés pour évaluer la distance d séparant l'identifiant 20 et le véhicule 10, sur la base du principe expliqué à présent en référence à la figure 2.

On a en effet schématiquement représenté en figure 2 la propagation de deux signaux de fréquences respectives $f_1$, $f_2$ (différentes l'une de l'autre) entre un module émetteur TX et un module récepteur RX (et selon un axe Ox passant par ces deux modules).

La mesure de la phase $\Phi_i$ de chacun de ces signaux au niveau du récepteur RX permet de déduire la distance d séparant le module émetteur TX et le module récepteur RX selon la formule :

$$d = c.(\Phi_2 - \Phi_1)/[2\pi.(f_2 - f_1)],$$

où c est la célérité des ondes électromagnétiques.

Il est possible d'effectuer de telles mesures de phase $\Phi_i$ pour plus de deux signaux de fréquences $f_i$ distinctes, ce qui permet de s'affranchir des phénomènes de réflexion ou de réfraction susceptibles de se produire à certaines fréquences.

La figure 3 illustre comment un système fonctionnant sur un tel principe pourrait faire l'objet d'une attaque relais perfectionnée.

Un premier attaquant A est situé à proximité du véhicule 10 (précisément à une distance $d_1$ du véhicule 10) et porte un premier module électronique 30 qui reçoit le signal émis par le véhicule 10 à une fréquence $f_i$ (on suppose ici que le module émetteur TX est le module de communication 12 du véhicule 10).

Le premier module électronique 30 effectue une modulation du signal reçu au moyen d'une porteuse de fréquence $f_P$ et transmet le signal modulé obtenu à un second module électronique 40 porté par un attaquant B situé à proximité de l'identifiant 20.

Comme bien visible en figure 3, les modules électroniques 30, 40 sont séparés d'une distance $d_2$, tandis que le second module électronique 40 est à une distance $d_3$ de l'identifiant 20.

Le second module électronique 40 démodule le signal qu'il reçoit et obtient donc le signal de fréquence $f_i$, qu'il transmet à l'identifiant 20.

La phase $\varphi$ correspondant à la propagation des signaux électromagnétiques du véhicule 10 à l'identifiant 20 via les attaquants A, B vaut :

$$\varphi = 2\pi.(f_P - f_i).d_2/c + 2\pi.f_i.(d_1+d_3)/c$$

Par conséquent, si les attaquants connaissent les fréquences successives d'émission $f_i$ et conçoivent les modules électroniques 30, 40 de sorte que la grandeur $(f_P - f_i)$ soit constante (c'est-à-dire que la fréquence $f_P$ de la porteuse soit modifiée pour chaque fréquence d'émission $f_i$ de manière à avoir : $f_P - f_i$ = cte), l'attaque passera inaperçue puisque l'estimation de la distance proposée ci-dessus donne dans ce cas :

$$d = c.[\varphi(f_2) - \varphi(f_1)]/[2\pi.(f_2 - f_1)] = d_1+d_3.$$

Autrement dit, la grandeur $(f_P - f_i)$ étant constante, le terme $2\pi.(f_P - f_i).d_2/c$ est également constant d'une mesure à l'autre et s'annule lorsque l'on fait la différence des phases mesurées $\varphi(f_2)$, $\varphi(f_1)$.

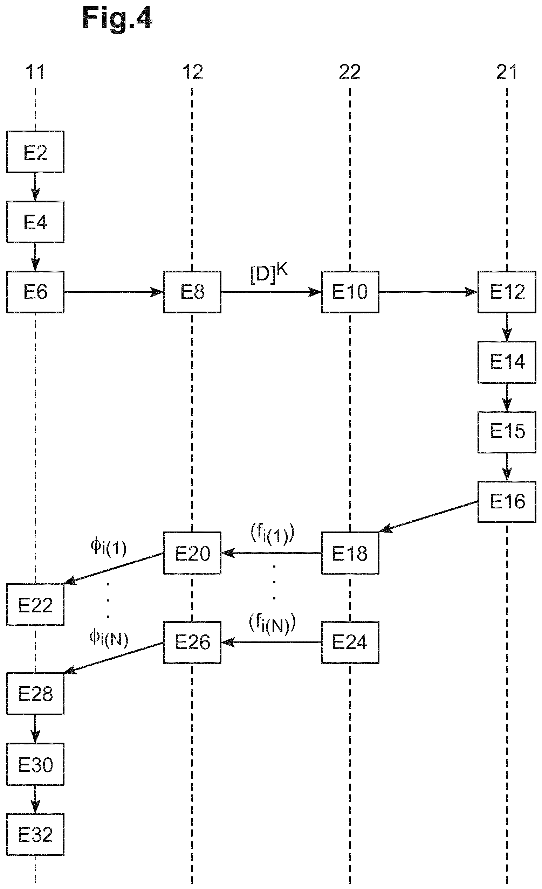

On décrit à présent en référence à la figure 4 un procédé d'estimation de la distance d qui n'est pas sujet à une telle attaque.

Ce procédé débute à l'étape E2 à laquelle l'unité électronique de commande 11 du véhicule 10 génère une liste de fréquences $f_i$ ordonnées aléatoirement.

En pratique, l'unité électronique de commande 11 mémorise par exemple un ensemble de fréquences $f_1$, $f_2$, ..., $f_N$ prédéfinies (où N est par exemple compris entre 50 et 100) et génère par tirage aléatoire une liste ordonnée d'indices i(1), i(2), ..., i(N) : la liste de fréquences ordonnées aléatoirement est alors $f_{i(1)}$, $f_{i(2)}$, ..., $f_{i(N)}$.

L'unité électronique de commande 11 procède alors à une étape E4 de chiffrement de données descriptives D de la liste ordonnée, au moyen d'un algorithme cryptographique de chiffrement utilisant la clé cryptographique K.

Les données descriptives D de la liste ordonnée représentent par exemple les valeurs successives des fréquences $f_i$, dans l'ordre donné par la liste ordonnée générée à l'étape E2. Dans l'exemple mentionné ci-dessus, les données descriptives D de la liste ordonnée peuvent, en variante, représenter la liste d'indices i(1), i(2), ..., i(N).

L'unité électronique de commande 11 commande alors au module de communication 12 l'émission des données descriptives chiffrées [D]$^K$ (étape E6).

Le module de communication 12 émet ainsi (étape E8) les données descriptives chiffrées [D]$^K$ via la liaison sans fil établie entre le module de communication 12 du véhicule 10 et le module de communication 22 de l'identifiant 20.

On remarque que l'on peut prévoir, lors de l'établissement de la liaison sans fil ou après son établissement, un processus d'authentification de l'identifiant 20 par l'unité électronique de commande 11 du véhicule 10, par exemple en vérifiant (éventuellement au moyen d'un protocole de type défi-réponse) que l'identifiant 20 détient bien des droits d'accès au véhicule 10 (c'est-à-dire en pratique que l'identifiant 20 mémorise une clé cryptographique donnée, par exemple la clé cryptographique K susmentionnée).

Le module de communication 22 de l'identifiant 20 reçoit les données descriptives chiffrées [D]$^K$ à l'étape E10 et transmet ces données [D]$^K$ à l'unité de commande 21 (étape E12).

L'unité de commande 21 peut ainsi procéder à l'étape E14 au déchiffrement des données descriptives chiffrées [D]$^K$, au moyen d'un algorithme de déchiffrement utilisant la clé cryptographique K (mémorisée comme déjà indiqué dans l'unité de commande 21).

Comme il vient d'être mentionné, on propose dans l'exemple décrit ici d'utiliser un système de chiffrement à clé symétrique. On pourrait toutefois utiliser en variante un système de chiffrement dans lequel la clé de chiffrement et la clé de déchiffrement sont différentes, par exemple un système à clé publique (utilisée pour le chiffrement) et clé privée (utilisée pour le déchiffrement).

L'unité de commande 21 peut ainsi mémoriser à l'étape E15 la liste de fréquences ordonnées aléatoirement indiquée par les données descriptives D. Dans l'exemple de mise en œuvre décrit plus haut, on peut prévoir que l'unité de commande 21 mémorise l'ensemble de fréquences $f_1$, $f_2$, ..., $f_N$ prédéfinies (identique à celui mémorisé dans l'unité électronique de commande 11) et que l'unité de commande 21 mémorise alors en pratique lors de l'étape E15 la liste ordonnée d'indices i(1), i(2), ..., i(N) définie par les données descriptives.

Dans l'exemple décrit ici, la liste ordonnée de fréquences est générée aléatoirement au niveau du véhicule 10 (précisément par l'unité électronique de commande 11) et transmise à l'identifiant 20 de manière à ce que la connaissance de cette liste soit partagée par ces deux entités. On pourrait prévoir en variante que la liste ordonnée de fréquences soit générée au niveau de l'identifiant 20 et transmise, par exemple sous forme chiffrée, au véhicule 10, ce qui permet également de partager la connaissance de la liste.

L'unité de commande 21 de l'identifiant 20 commande alors (étape E16) au module de communication 22 l'émission de signaux électromagnétiques ayant successivement les fréquences $f_i$ listées dans la liste ordonnée de fréquences.

On a par exemple représenté à l'étape E18 sur la figure 4 l'émission d'un signal électromagnétique de fréquence $f_{i(1)}$ par le module de communication 22 de l'identifiant 20.

Ce signal électromagnétique de fréquence $f_{i(1)}$ est reçu par le module de communication 12 du véhicule 10 à l'étape E20, ce qui permet d'obtenir une mesure de phase $\Phi_{i(1)}$ du signal électromagnétique reçu. On pourra se référer à ce sujet au document US 5 220 332.

La phase mesurée $\Phi_{i(1)}$ est reçue par l'unité électronique de commande 11 et mémorisée à l'étape E22.

Des étapes similaires aux étapes E18 à E22 sont effectuées pour chacune des fréquences de la liste ordonnée de fréquence, dans l'ordre établi par cette liste.

On a également représenté sur la figure 4 l'émission par le module de communication 22 d'un signal électromagnétique de fréquence $f_{i(N)}$ (dernière fréquence de la liste ordonnée dans l'exemple décrit) à l'étape E24.

Ce signal électromagnétique de fréquence $f_{i(N)}$ est reçu par le module de communication 12 du véhicule 10 à l'étape E26, ce qui permet d'obtenir une mesure de phase $\Phi_{i(N)}$ du signal électromagnétique reçu.

La phase mesurée $\Phi_{i(N)}$ est reçue par l'unité électronique de commande 11 et mémorisée à l'étape E28.

L'unité électronique de commande 11 mémorise ainsi les phases mesurées $\Phi_i$ pour une pluralité de fréquences $f_i$ (quel que soit l'ordre dans lequel ces mesures ont été effectuées) et peut en déduire à l'étape E30 une estimation de la distance d séparant l'identifiant 20 et le véhicule 10.

Par exemple, en tenant compte du fait que les différents points de coordonnées $(f_i, \Phi_i)$ sont en théorie situés sur une droite de pente $c/(2\pi.d)$ d'après le principe d'estimation de la distance rappelé en référence à la figure 2, l'étape E30 comprend par exemple la détermination de la pente d'une droite de régression liée aux points de coordonnées $(f_i, \Phi_i)$ et la détermination de la distance estimée en fonction de cette pente.

L'unité électronique de commande 11 du véhicule 10 peut alors éventuellement commander à l'étape E32 une fonctionnalité du véhicule 10 en fonction de la distance estimée. Par exemple, l'unité électronique de commande 11 peut commander le déverrouillage des portes du véhicule 10 si la distance estimée est inférieure à un seuil prédéterminé.

Dans l'exemple qui vient d'être décrit, les signaux électromagnétiques (ayant successivement les fréquences $f_i$ dans l'ordre indiqué dans la liste ordonnée de fréquences) sont émis par le module de communication 22 de l'identifiant 20.

En variante, ces signaux électromagnétiques pourraient être émis par le module de communication 12 du véhicule 10 ; les phases de réception $\Phi_i$ seraient alors mesurées au niveau du module de communication 22. Les phases mesurées $\Phi_i$ en association avec chaque fréquence $f_i$ pourraient alors être transmises (via la liaison sans fil établie entre les modules de communication 12, 22, éventuellement sous forme chiffrée) à l'unité électronique de commande 11 pour estimation de la distance d (comme lors de l'étape E30 décrite ci-dessus) ; les phases mesurées $\Phi_i$ pourraient également être utilisées au sein de l'identifiant 20 pour estimer la distance d (selon le principe rappelé plus haut), auquel cas la distance d estimée au sein de l'identifiant 20 est transmise à l'unité électronique de commande 11 via la liaison sans fil établie entre les modules de communication 12, 22 (éventuellement sous forme chiffrée).

Selon une autre variante encore, des signaux électromagnétiques ayant successivement les fréquences $f_i$ (dans l'ordre indiqué par la liste ordonnée de manière aléatoire) sont émis par le module de communication 22 de l'identifiant 20 et une mesure de phase $\Phi_i$ est réalisée au niveau du véhicule 10 comme décrit ci-dessus en référence à la figure 4. En outre, des signaux électromagnétiques ayant successivement les fréquences $f_i$ (dans l'ordre indiqué par la liste ordonnée de manière aléatoire, ou dans un autre ordre défini de manière aléatoire comme expliqué plus haut) sont émis par le module de communication 12 du véhicule 10 et une mesure de phase $\Phi'_i$ est réalisée au niveau de l'identifiant 20.

Les valeurs de phase $\Phi'_i$ mesurées au niveau de l'identifiant 20 sont transmises à l'unité électronique de commande 11 via la liaison sans fil établie entre les modules de communication 12, 22.

Selon cette variante, l'unité électronique de commande 11 détermine, pour chaque fréquence $f_i$, la somme de la phase correspondante $\Phi_i$ mesurée au niveau du véhicule 10 et de la phase correspondante $\Phi'_i$ mesurée au niveau de l'identifiant 20, et estime la distance d séparant l'identifiant 20 et le véhicule 10 sur la base de ces sommes (associées chacune à une fréquence $f_i$).

De telles sommes correspondent en effet à un aller-retour du signal électromagnétique, c'est-à-dire à une distance égale à 2.d, et permettent de s'affranchir de la différence de référence de phase pouvant exister entre les deux modules de communication 12, 22, comme expliqué par exemple dans le document US 5 220 332.

En effet, le processus d'échange des signaux et de mesure des phases de réception est alors le suivant pour une fréquence donnée f :

- envoi par un premier module (par exemple le module de communication 12) d'un signal électromagnétique ayant cette fréquence donnée f à une phase de référence $\Phi_{ref}$ ;
- réception du signal par le second module (ici le module de communication 22) avec une phase (absolue) $\Phi'_{abs} = \Phi_{ref} + 2*\pi*d*f/c$ ;
- mesure de cette phase par le second module avec sa propre phase de référence $\Phi'_{ref}$, la phase mesurée valant donc :

$$\Phi' = \Phi'_{abs} - \Phi'_{ref} = \Phi_{ref} + 2*\pi*d*f/c - \Phi'_{ref} \; ;$$

- envoi par le second module d'un signal électromagnétique ayant cette même fréquence donnée f à sa propre phase de référence $\Phi'_{ref}$ ;
- réception par le premier module de ce signal électromagnétique avec une phase (absolue) $\Phi_{abs} = \Phi'_{ref} + 2*\pi*d*f/c$ ;
- mesure de cette phase par le premier module avec sa référence de phase $\Phi_{ref}$, ce qui donne une phase mesurée :

$$\Phi = \Phi_{abs} - \Phi_{ref} = \Phi'_{ref} + 2*\pi*d*f/c - \Phi_{ref}.$$

La somme $(\Phi + \Phi')$ des phases mesurées vaut : $2*(2*\pi)*d*f/c$ et on s'affranchit ainsi du décalage de phase entre les deux modules 12, 22.

Dans un autre mode de réalisation envisageable, la réception de phases mesurées, le calcul des sommes précitées et l'estimation de la distance sur la base de ces sommes pourraient être effectués par l'unité de commande 21 de l'identifiant 20 (la distance estimée pouvant alors éventuellement être transmise de l'unité de commande 21 à l'unité électronique de commande 11 du véhicule 10 via la liaison sans fil établie).

Dans tous les cas, l'ordre d'utilisation des différentes fréquences $f_i$ pour les signaux émis est aléatoire de telle sorte qu'un attaquant ne pourra pas prévoir cet ordre et adapter la fréquence de la porteuse $f_p$ à la fréquence $f_i$ du signal émis (comme expliqué ci-dessus en référence à la figure 3). Les attaquants ne pourront donc pas mettre en œuvre l'attaque décrite ci-dessus en référence à la figure 3.

**Revendications**

1. Procédé d'estimation d'une distance (d) séparant un véhicule (10) équipé d'un premier module de communication sans fil (12) et un identifiant (20) équipé d'un second module de communication sans fil (22), comprenant les étapes suivantes :

   - génération (E2) par l'un des premier et second modules de communication sans fil (12, 22) d'une liste de fréquences ordonnée aléatoirement ;
   - chiffrement (E4) de données descriptives (D) de la liste, lesdites données descriptives (D) de la liste représentant les valeurs successives des fréquences ou les indices de fréquences,
   - transmission chiffrée entre le premier module de communication sans fil (12) et le second module de communication sans fil (22) des données descriptives (D) de la liste entre le premier module de communication sans fil (12) et le second module de communication sans fil (22);
   - réception (E20 ; E26), par l'autre au moins des premier et second modules de communication sans fil (12, 22), de signaux électromagnétiques ayant une fréquence ($f_{i(1)}$ ; $f_{i(N)}$) évoluant successivement parmi une pluralité de fréquences conformément à ladite liste ;
   - pour chaque fréquence ($f_{i(1)}$ ; $f_{i(N)}$) de la pluralité de fréquences, mesure d'une phase ($\Phi_{i(1)}$ ; $\Phi_{i(N)}$) de réception du signal électromagnétique ayant la fréquence concernée ($f_{i(1)}$ ; $f_{i(N)}$) ;
   - estimation (E30) de ladite distance (d) sur la base des phases mesurées ($\Phi_{i(1)}$ ; $\Phi_{i(N)}$).

2. Procédé d'estimation selon la revendication 1, comprenant une étape d'émission (E18 ; E24), par l'autre des premier et second modules de communication sans fil (12, 22), desdits signaux électromagnétiques ayant une fréquence ($f_{i(1)}$ ; $f_{i(N)}$) évoluant successivement parmi la pluralité de fréquences conformément à ladite liste.

3. Procédé d'estimation selon l'une des revendications 1 ou 2, dans lequel l'étape d'estimation (E30) de ladite distance (d) comprend une étape de détermination d'une pente d'une droite de régression liée à des points définis chacun par une fréquence ($f_{i(1)}$ ; $f_{i(N)}$) de la pluralité de fréquences et la phase mesurée associée ($\Phi_{i(1)}$ ; $\Phi_{i(N)}$).

4. Procédé d'estimation selon l'une des revendications 1 à 3, dans lequel l'étape de réception (E20 ; E26) est mise en œuvre par le premier module de communication sans fil (12).

5. Procédé d'estimation selon la revendication 4, comprenant en outre les étapes suivantes :

   - émission par le premier module de communication d'une pluralité de signaux électromagnétiques ayant successivement les fréquences $f_i$ dans l'ordre indiqué par la liste ordonnée de manière aléatoire ;
   - pour chaque fréquence de la pluralité de fréquences, mesure, au niveau du second module de communication sans fil, d'une seconde phase d'un signal électromagnétique reçu ayant la fréquence concernée ;
- transmission des secondes phases mesurées du second module de communication sans fil au premier module de communication sans fil.

6. Procédé d'estimation selon la revendication 5, dans lequel les secondes phases transmises sont utilisées au cours de l'étape d'estimation de ladite distance en déterminant, pour chaque fréquence $f_i$, la somme de la phase correspondante $\Phi_i$ mesurée au niveau du véhicule 10 et de la phase correspondante $\Phi'_i$ mesurée au niveau de l'identifiant 20, et en estimant la distance d séparant l'identifiant 20 et le véhicule 10 sur la base de ces sommes.

7. Procédé d'estimation selon l'une des revendications 1 à 6, comprenant une étape de mise en œuvre éventuelle d'une fonctionnalité du véhicule (E32) en fonction de la distance estimée (d).

8. Unité électronique (11) pour véhicule (10) comprenant :

    - un élément conçu pour générer une liste de fréquences ordonnée aléatoirement ;
    - un élément conçu pour chiffrer des données descriptives de la liste ordonnée, lesdites données descriptives (D) de la liste représentant les valeurs successives des fréquences ou les indices de fréquences ;
    - un module de communication commandé par l'unité électronique (11) pour transmettre pour émettre les données descriptives chiffrées ;
    - un élément conçu pour commander la réception, en provenance d'un identifiant, de signaux électromagnétiques ayant une fréquence évoluant successivement parmi une pluralité de fréquences conformément à ladite liste ;
    - un élément conçu pour mesurer, pour chaque fréquence de la pluralité de fréquences, une phase de réception du signal électromagnétique ayant la fréquence concernée ;
    - un élément conçu pour estimer une distance séparant le véhicule et l'identifiant sur la base des phases mesurées.

**Patentansprüche**

1. Verfahren zum Schätzen einer Entfernung (d) zwischen einem Fahrzeug (10), das mit einem ersten drahtlosen Kommunikationsmodul (12) ausgestattet ist, und einer Kennung (20), die mit einem zweiten drahtlosen Kommunikationsmodul (22) ausgestattet ist, mit den folgenden Schritten:

    - Erzeugen (E2) einer zufällig geordneten Frequenzliste durch eines der ersten und zweiten drahtlosen Kommunikationsmodule (12, 22);
    - Verschlüsseln (E4) von beschreibenden Daten (D) der Liste, wobei die beschreibenden Daten (D) der Liste die aufeinanderfolgenden Werte der Frequenzen oder die Frequenzindizes darstellen,
    - verschlüsselte Übertragung der beschreibenden Daten (D) der Liste zwischen dem ersten drahtlosen Kommunikationsmodul (12) und dem zweiten drahtlosen Kommunikationsmodul (22);
    - Empfang (E20; E26) elektromagnetischer Signale mit einer Frequenz ($f_{i(1)}$ ; $f_{i(N)}$ ), die sich nacheinander zwischen einer Vielzahl von Frequenzen gemäß der Liste ändert, durch das andere der ersten und zweiten drahtlosen Kommunikationsmodule (12, 22);
    - für jede Frequenz ($f_{i(1)}$ ; $f_{i(N)}$ ) der Vielzahl von Frequenzen, Messen einer Empfangsphase ($\Phi_{i(1)}$ ; $\Phi_{i(N)}$ ) des elektromagnetischen Signals mit der betreffenden Frequenz ($f_{i(1)}$ ; $f_{i(N)}$ );
    - Schätzen (E30) der genannten Entfernung (d) auf der Grundlage der gemessenen Phasen ($\Phi_{i(1)}$ ; $\Phi_{i(N)}$ ).

2. Schätzverfahren nach Anspruch 1, umfassend einen Sendeschritt (E18; E24) der anderen der ersten und zweiten drahtlosen Kommunikationsmodule (12, 22) der elektromagnetischen Signale mit einer Frequenz ($f_{(i_{()}(1))}$ ; $f_{(i_{(N)})}$), die sich nacheinander unter der Vielzahl von Frequenzen gemäß der Liste ändert.

3. Schätzverfahren nach einem der Ansprüche 1 oder 2, wobei der Schritt des Schätzens (E30) der genannten Entfernung (d) einen Schritt des Bestimmens einer Steigung einer Regressionsgeraden umfasst, die mit Punkten verbunden ist, die jeweils durch eine Frequenz ($f_{i(1)}$ ; $f_{(i(N))}$ )der Vielzahl von Frequenzen und der zugehörigen gemessenen Phase ($\Phi_{(i(1))}$ ; $\Phi_{(i(N))}$ )definiert sind.

4. Schätzverfahren nach einem der Ansprüche 1 bis 3, wobei der Empfangsschritt (E20; E26) durch das erste drahtlose Kommunikationsmodul (12) durchgeführt wird.

**5.** Schätzverfahren nach Anspruch 4, das außerdem die folgenden Schritte umfasst:

- Senden einer Vielzahl von elektromagnetischen Signalen mit aufeinanderfolgenden Frequenzen $f_i$ in der durch die zufällig geordneten Liste angegebenen Reihenfolge durch das erste Kommunikationsmodul;
- für jede Frequenz der Vielzahl von Frequenzen, Messen einer zweiten Phase eines empfangenen elektromagnetischen Signals mit der betreffenden Frequenz durch das zweite drahtlose Kommunikationsmodul;
- Übertragung der gemessenen zweiten Phasen vom zweiten drahtlosen Kommunikationsmodul zum ersten drahtlosen Kommunikationsmodul.

**6.** Schätzverfahren nach Anspruch 5, bei dem die übertragenen zweiten Phasen während des Schätzschritts der genannten Entfernung verwendet werden, indem für jede Frequenz $f_i$ die Summe der entsprechenden Phase $\Phi_i$, die am Fahrzeug 10 gemessen wurde, und der entsprechenden Phase $\Phi'_i$, die an der Kennung 20 gemessen wurde, bestimmt wird und die Entfernung d zwischen der Kennung 20 und dem Fahrzeug 10 auf der Grundlage dieser Summen geschätzt wird.

**7.** Schätzverfahren nach einem der Ansprüche 1 bis 6, umfassend einen Schritt der eventuellen Aktivierung einer Fahrzeugfunktion (E32) in Abhängigkeit von der geschätzten Entfernung (d).

**8.** Elektronische Einheit (11) für ein Fahrzeug (10), umfassend:

- ein Element, das dazu ausgelegt ist, eine geordnete Frequenzliste nach dem Zufallsprinzip zu erzeugen;
- ein Element, das dazu ausgelegt ist, beschreibende Daten der geordneten Liste zu verschlüsseln, wobei die beschreibenden Daten (D) der Liste die aufeinanderfolgenden Werte der Frequenzen oder die Frequenzindizes darstellen;
- ein von der elektronischen Einheit (11) gesteuertes Kommunikationsmodul zum Senden der verschlüsselten beschreibenden Daten;
- ein Element, das dazu ausgelegt ist, den Empfang von elektromagnetischen Signalen mit einer Frequenz, die sich nacheinander zwischen einer Vielzahl von Frequenzen gemäß der Liste ändert, von einer Kennung aus zu steuern;
- ein Element, das dazu ausgelegt ist, für jede der mehreren Frequenzen eine Empfangsphase des elektromagnetischen Signals mit der betreffenden Frequenz zu messen;
- ein Element, das dazu ausgelegt ist, auf der Grundlage der gemessenen Phasen eine Entfernung zwischen dem Fahrzeug und dem Identifikator zu schätzen.

**Claims**

**1.** A method for estimating a distance (d) between a vehicle (10) equipped with a first wireless communication module (12) and an identifier (20) equipped with a second wireless communication module (22), comprising the following steps:

- generating (E2) by one of the first and second wireless communication modules (12, 22) a randomly ordered list of frequencies;
- encrypting (E4) descriptive data (D) of the list, said descriptive data (D) of the list representing the successive values of the frequencies or the frequency indices,
- encrypted transmission between the first wireless communication module (12) and the second wireless communication module (22) of the descriptive data (D) of the list between the first wireless communication module (12) and the second wireless communication module (22);
- reception (E20; E26), by at least one of the first and second wireless communication modules (12, 22), of electromagnetic signals having a frequency ($f_{i(1)}$; $f_{i(N)}$) changing successively among a plurality of frequencies in accordance with said list;
- for each frequency ($f_{i(1)}$; $f_{i(N)}$) of the plurality of frequencies, measuring a phase ($\Phi_{i(1)}$; $\Phi_{i(N)}$) of reception of the electromagnetic signal having the frequency concerned ($f_{i(1)}$; $f_{i(N)}$);
- estimating (E30) said distance (d) based on the measured phases ($\Phi_{i(1)}$; $\Phi_{i(N)}$).

**2.** Estimation method according to claim 1, comprising a transmission step (E18; E24), by the other of the first and second wireless communication modules (12, 22), of said electromagnetic signals having a frequency ($f_{i()(1)}$; $f_{i(N)}$) changing successively among the plurality of frequencies in accordance with said list.

3. An estimation method according to one of claims 1 or 2, wherein the step of estimating (E30) said distance (d) comprises a step of determining a slope of a regression line related to points each defined by a frequency $(f_{i(1)}; f_{i(N)})$ of the plurality of frequencies and the associated measured phase $(\Phi_{i(1)}; \Phi_{i(N)})$.

4. Estimation method according to one of claims 1 to 3, wherein the reception step (E20; E26) is implemented by the first wireless communication module (12).

5. Estimation method according to claim 4, further comprising the following steps:

    - transmission by the first communication module of a plurality of electromagnetic signals having successive frequencies $f_i$ in the order indicated by the randomly ordered list;
    - for each frequency of the plurality of frequencies, measuring, at the second wireless communication module, a second phase of a received electromagnetic signal having the relevant frequency;
    - transmission of the measured second phases from the second wireless communication module to the first wireless communication module.

6. Estimation method according to claim 5, wherein the transmitted second phases are used during the step of estimating said distance by determining, for each frequency $f_i$, the sum of the corresponding phase $\Phi_i$ measured at vehicle 10 and the corresponding phase $\Phi'_i$ measured at identifier 20, and estimating the distance d separating identifier 20 and vehicle 10 on the basis of these sums.

7. Estimation method according to one of claims 1 to 6, comprising a step of optionally implementing a vehicle function (E32) based on the estimated distance (d).

8. Electronic unit (11) for a vehicle (10) comprising:

    - a component designed to randomly generate an ordered list of frequencies ;
    - an element designed to encrypt descriptive data of the ordered list, said descriptive data (D) of the list representing the successive values of the frequencies or the frequency indices;
    - a communication module controlled by the electronic unit (11) for transmitting the encrypted descriptive data;
    - an element designed to control the reception, from an identifier, of electromagnetic signals having a frequency that changes successively among a plurality of frequencies in accordance with said list;
    - an element designed to measure, for each frequency of the plurality of frequencies, a reception phase of the electromagnetic signal having the frequency concerned;
    - an element designed to estimate a distance separating the vehicle and the identifier on the basis of the measured phases.

**Fig.1**

**Fig.2**

**Fig.3**

# Fig.4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2007128319 A
- US 2003090365 A
- US 5220332 A